# EUROPEAN PATENT SPECIFICATION

(11) **EP 0 481 774 B1**
(45) Date of publication and mention of the grant of the patent: **24.06.1998**
(21) Application number: 91309563.4
(22) Date of filing: 17.10.1991
(51) Int. Cl.: H02K 23/28, H02K 41/035

(54) **Two ends bidirectional conduction non-closing armature windings for DC motor**
Zweirichtungsleitende, zwei Enden aufweisende, nicht geschlossene Ankerwicklungen für Gleichstrommotor
Enroulements d'induit non fermés, à deux extrémités et à conduction bidirectionnelle pour moteur à courant continu

(30) Priority: 19.10.1990 US 599741
(43) Date of publication of application: 22.04.1992
(73) Proprietor: Yang, Tai-Her, Taipei (TW)
(72) Inventor: Yang, Tai-Her, Taipei (TW)
(74) Representative: Arthur, Bryan Edward

(56) References cited:
- DE-C- 52 130
- DE-C- 69 156
- DE-C- 223 647
- DE-C- 250 343
- DE-C- 304 386
- US-A- 4 185 216
- US-A- 4 308 480
- US-A- 4 459 503
- G. McPherson et al., "An Introduction to Electrical Machines and Transformers", 2nd edn., Wiley (NY) 1990, pages 367-8.

## Description

The armatures of traditional DC rotary machines are generally furnished with either lap windings or wave windings. It does not matter which one of these two types of windings are furnished, the end lead to the whole grindings will return to its start lead to form a closed loop. Therefore, it is impossible to use these traditional winding techniques to construct a limitless-extending non-closed armature winding for a DC rotary machine. The object of the present invention is to provide a novel non-closed armature coil winding technique for DC machines through the utilization of two ends bidirectional conducting effect. This technique is applicable to all rotary DC machines as well as in linear DC machines.

German patent number DE-C-52 130 discloses a rotary dynamo-electric machine with a conventional stator having field poles and the rotor conductors are longitudinally extending rods. Commutator brushes mounted on the stator housing engage the opposite ends of the rods. The brushes are arranged in pairs, one at each end of the rotor and some brushes at each end are connected together in order to direct current in series or in parallel back and forth along the conductor rods.

US patent number 4,185,216 discloses a homopolar dynamoelectric machine in which the magnetic poles are separated circumferentially of the machine. Longitudinal field windings are placed in recesses in a cylindrical stator to generate a radial magnetic field. The rotor carries longitudinal conductors on its surface and commutator contacts at each end of the rotor to complete the electrical circuit. Brushes are connected individually or in groups to the stator conductors.

### SUMMARY OF THE INVENTION

The objective of present invention is to provide a novel limitless-extending non-closed armature coil winding technique for DC machine through the utilization of two ends bidirectional conducting effect.

According to a first aspect, this invention is a DC electromagnetic machine comprising an armature including non-closed circuit armature winding having conductive strips evenly distributed longitudinally along the armature to cut magnetic flux when moving, each conductor strip including a first commutating contact disposed at one end thereof and a second commutating contact disposed at the other end of the conductive strip; a body; at least one magnetic pole carried by the body orthogonally facing the armature windings; a first and second conductive brush set carried by the body for making contact with the first commutating contacts and the second commutating contacts respectively, each brush set including at least two brushes and the first brush set including alternating brushes of each polarity characterised in that each brush of the first and second brush set is less than 180 degrees (electrical angle) in arc length and can connect to at least two commutating contacts and in that the first and second sets of conductive brushes are offset from each other by half of a brush length to connect the conductive strips in parallel.

According to a second aspect, this invention is a DC electromagnetic machine comprising an armature, which may be a cylindrical, disc or conical rotor, including non-closed circuit armature winding having conductive strips evenly distributed longitudinally along the rotor to cut flux when moving, each conductive strip including a first commutating contact disposed at one end thereof, and a second commutating contact disposed at the other end of the conductive strip; a body; at least one magnetic pole carried by the body orthogonally facing the armature windings; a first and second conductive brush set carried by the body for making contact with the first commutating contacts and the second commutating contacts respectively, each brush set including two brushes and the first brush set including a brush of each polarity characterised in that each brush of the first and second brush set is a little less than 180 degrees (electrical angle) in embracement or arc length of the first or second commutating contacts respectively, having separation gaps between the brushes just greater than a single commutating contact to prevent short circuiting, and in that the first and second sets of brushes are offset 90 degrees (electrical angle) from each other to connect the conductive strips in parallel.

### BRIEF DESCRIPTION OF THE DRAWINGS

Figure 1 is one of the embodiments of the present invention for a DC rotary machine, showing its armature coil windings connected in parallel.

Figure 2 is a DC rotary machine, showing its armature coil windings connected in series.

Figure 3 is the front view of an armature with parallel connected two ends bidirectional non-closed windings, showing how the present invention is applied to a DC rotary machine.

Figure 4 is the right end view of the same DC rotary machine as shown in Figure 3.

Figure 5 is the left end view of the same DC rotary machine as shown in Figure 3.

### DETAILED DESCRIPTION OF THE PRESENT INVENTION

The armatures of traditional DC rotary machines are generally furnished with either lap windings or wave windings. No matter which one of these two types of windings are furnished, the ending lead of the whole winding will return to its starting lead to form a closed loop. Therefore, it is impossible to use these traditional winding technique to construct a limitless-extending non-closing armature windings for a DC rotary machine. The present invention is to provide a novel non-closed armature winding technique for DC machines through the utilization of two ends bidirectional flow effect, so that its windings are combined in limitless-extending form. This can be applied to all DC rotary machines, and to linear DC machines.

DC motors with two ends bidirectional conducting non-closing armature windings comprise of mainly:
- Armature windings are constructed from strip conductors and embedded longitudinally inside the armature slots. Each end of each strip conductor is provided with a commutating contact segment. The strip conductors are utilized to cut magnetic flux when the armature is rotated;
- At least one or more than one magnetic poles are facing orthogonally to the armature windings;
- Magnetic poles and brushes are fixed on the same body (rotary body or stationary body);
- The matching between armature and magnetic poles depends on armature output connection, including parallel and series connections.

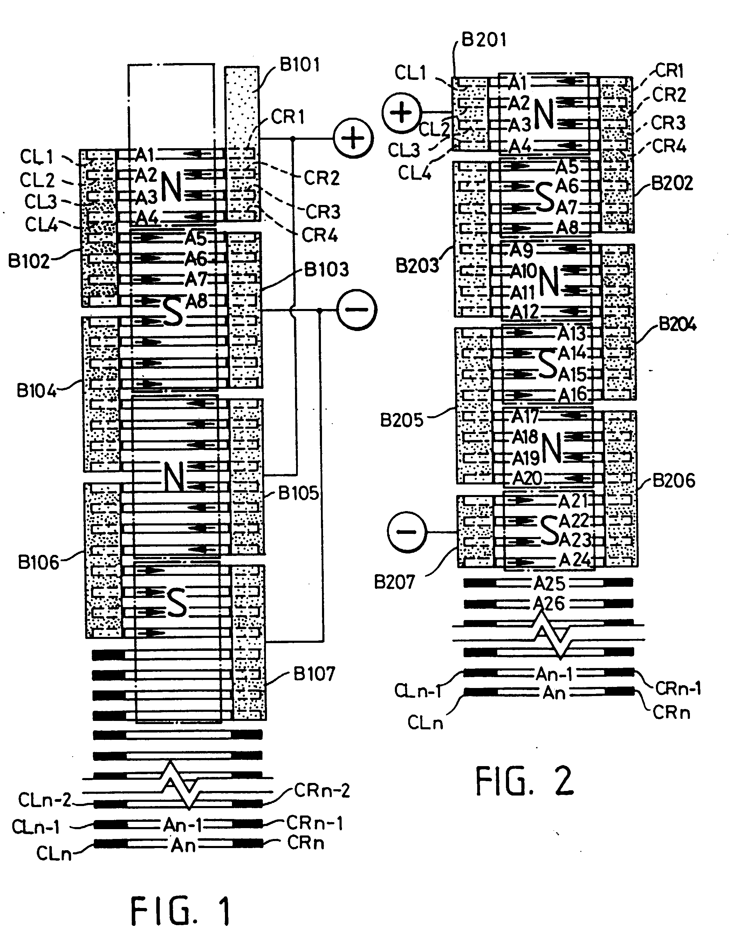

Figure 1 shows an embodiment example of the parallel connected armature windings for the two ends bidirectional conducting non-closed armature windings for s DC rotary machine, which includes mainly:
- At least one magnetic pole or a pair of magnetic poles which faces orthogonally to the armature conductors;
- Magnetic poles and brushes are located on the same body (rotary body or stationary body), which has relative motion with respect to armature;
- Armature conductor strips A1-An are sequentially laid out, their two ends are connected to respective commutating segments CR1 ^{~} CRn and CL1 ^{~} CLn. The number of armature conductors is not limited by the length of the relative moving body on which the brushes and the magnetic poles are located;
- At least two sets of brushes with 90° electric angle separations between the sets are provided respectively on left side and right side commutating contact segments of the armature conductors. The gaps between adjacent brushes of each set should not be less than one commutating contact segment, while the maximum embracing angle of each brush should be less than 180° electric angle. The brushes of each set are connected together to form a parallel circuit for producing motor or generator function.

In the parallel connected DC motor application example, as shown in Figure 1, current from a positive pole goes into the motor from brush B101, then flows via conductors A1 ^{~} A4 to brush B102. Thereafter it flows in reverse direction to brush B103 via armature conductors A5 ^{~} A8 then goes to a negative pole. Brushes B101 and B105 are both connected to the positive pole and brushes B103 and B107 are both connected to the negative pole. Brushes B102, B104, B106 are utilized as auxiliary brushes for serving armature conductor connection purpose. The armature windings are thus formed into a parallel connected linear DC motor circuit.

Figure 2 shows a series connected linear DC motor circuit with two ends bidirectional conducting non-closing armature windings, which includes mainly:
- At least one magnetic pole or a pair of magnetic poles which faces orthogonally to the armature conductors;
- Magnetic poles and brushes are located on the same body (rotary body or stationary body), which has relative motion with respect to the armature;
- Armature conductors A1 ^{~} An are sequentially laid out, their two ends are connected to respective commutating segments CR1 ^{~} CRn and CL1 ^{~} CLn. The number of armature conductors is not limited by the length of the relative moving body on which the brushes and the magnetic poles are located;
- At least two sets of brushes with 180° electric angle separations are provided respectively on left side and right side commutating segments of the armature conductors. The gaps between adjacent brushes of each set should not be less than one commutating segment, while the maximum embracing angle of each brush should be less than 360° electric angle. In this manner, by incorporating with the brush sets of the other side, all armature conductors within this 360° electric angle coverage are evenly divided and connected together to form a series circuit for producing motor or generator function.

In the series connected DC motor example, as shown in figure 2, current from a positive pole goes into the motor from brush B201, then it flows into brush B202 via armature conductors A1 ^{~} A4. Thereafter, it changes direction and flows into brush B203 via armature conductors A5 - A8, then it changes direction again and flows into brush B204 via armature conductors A9 - A12. Thereafter it changes direction and flows into brush B205 via armature conductors A13 - A16, then it changes direction again and flows into brush B206 via armature conductors A17 - A20. Thereafter it changes direction again and flows into the last brush B207 and goes to the negative pole via armature conductors A21 - A24. In this manner, it forms into a series connected linear DC motor.

In both of the above said parallel and series connected linear DC motor examples, the relative angle between the axis of the magnetic pole and the axis of the center line of the armature conductors carrying same directional current is adjustable from a lagging angle to a leading angle based on armature reaction whether this DC machine is used as a motor or a generator.

In addition, these leading or lagging angle adjustments can also be utilised to adjust the repulsive or attractive force between the rotary body and the stationary body, since thse forces come from the same power source. Therefore, it is especially switchable to be used as the driving motor of a high speed electrified train. These lagging and leading angle adjustments can be done by positional movement of either magnetic poles or brushes.

In the rotary DC machine application example, the rotor is a cylindrical structure (cylindrical, disc or conical rotor) and stator with relative magnetic pole.

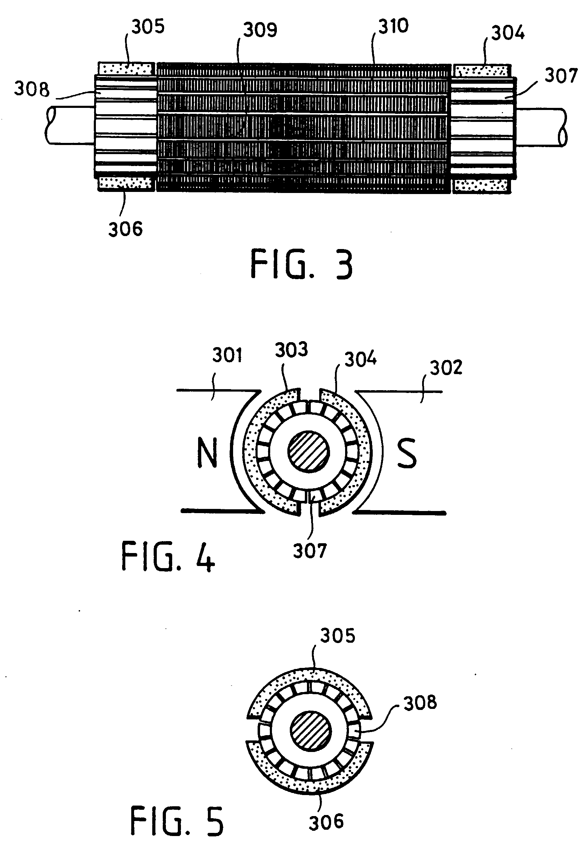

Figures 3, 4, 5 show an application example of the present invention, as it applies to a DC rotary motor with parallel connected two ends bidirectional conducting non-closing armature windings. From these figures it can be seen that the cylindrical rotor is provided with evenly distributed armature windings 310; the two ends of these windings are connected to their respective commutating segments 307, 308; at least two brushes 303, 304 (one for inlet, the other for outlet), each with an embracement angle of less than 180° electric angle, are provided on commutator 307. The width of the gaps between these two brushes should be greater than one commutating segment to prevent the windings from short circuit. The other commutator 308 is also provided with two auxiliary brushes 305, 306, and each brush has an embracement angle or arc length of less than 180° electric angle. The gaps between these two brushes should also be greater than one commutator segment to prevent the winding from short circuit, and these two auxiliary brushes should be located 90° electric angle from the former two brushes; the magnetic poles 301, 302, can be constructed either with permanent magnetic materials or with excited magnetic materials. Neglecting commutation angle condition, the axis of the magnetic poles is in coincidence with the axis of the inlet and outlet brushes.

The length of each brush is expressed as an angle, and relates to the angle of embracement of the brush. 360° arc length is the length of arc along the armature between a conductive strip lying opposite to a north pole and the conductive strip lying opposite the next subsequent north pole.

As will be appreciated from the foregoing, the motor may be a rotary motor or a linear-type motor.

As a summary to the above statements, this novel two ends bidirectional conducting non-closing armature winding design can be applied both to a linear DC machine with brushes or a rotary DC machine with brushes for various industrial and transportational usage.

## Claims

1. A DC electromagnetic machine comprising
an armature (309) including non-closed circuit armature winding (310) having conductive strips (Al-An) evenly distributed longitudinally along the armature (309) to cut magnetic flux when moving, each conductive strip (Al-An) including a first commutating contact (CLl-CLn) disposed at one end thereof and a second commutating contact (CRl-CRn) disposed at the other end of the conductive strip (Al-An);
a body;
at least one magnetic pole (301,302) carried by the body orthogonally facing the armature windings (310);
a first (303,304) and a second (305,306) conductive brush set carried by the body for making contact with the first commutating contacts (CLl-CLn) and the second commutating contacts (CRl-CRn) respectively, each brush set (303-306) including at least two brushes and the first brush set including alternating brushes of each polarity, characterised in that each brush of the first and second brush sets (303-306) is less than 180 degrees (electrical angle) in arc length and can connect to at least two commutating contacts (CLl-CLn, CRl-CRn), and in that the first and second sets of conductive brushes (303-306) are offset from each other by half of a brush length to connect the conductive strips (Al-An) in parallel.

2. A DC electromagnetic machine comprising:
an armature (309) including non-closed circuit armature winding (310) having conductive strips (Al-An) evenly distributed longitudinally along the rotor (309) to cut flux when moving, each conductive strip (Al-An) including a first commutating contact (CLl-CLn) disposed at one end thereof, and a second commutating contact (CR1-CRn) disposed at the other end of the conductive strip (Al-An);
a body;
at least one magnetic pole (301-302) carried by the body orthogonally facing the armature windings (310);
a first (303,304) and a second (305,306) conductive brush set carried by the body for making contact with the first commutating contacts (CLl-CLn) and the second commutating contacts (CRl-CRn) respectively, each brush set (303-306) including two brushes and the first brush set including a brush of each polarity, characterised in that each brush of the first and second brush set is a little less than 180 degrees (electrical angle) in embracement or arc length of the first or second commutating contacts (CRl-CRn, CLl-CLn) respectively, having separation gaps between the brushes just greater than a single commutating contact to prevent short circuiting, and in that the first (303,304) and second (305,306) sets of brushes are offset 90 degrees from each other to connect the conductive strips (Al-An) in parallel.

3. A machine according to claim 2, wherein the armature (309) is a cylindrical, disc or conical rotor.

4. A machine according to claim 1, 2 or 3, characterised in that the axis of the at least one magnetic pole (301,302) is angularly adjustable about the axis of rotation of the armature winding (310) to run at an angle leading or lagging the armature winding (310) in order to act as a motor or a generator depending on the leading or lagging angle.

5. A machine according to any preceding claim, characterised in that the at least one magnetic pole (301,302) is a permanent magnet.

6. A machine according to any of claims 1 to 4, characterised in that the at least one magnetic pole (301,302) is an electromagnet.

7. A machine according to any preceding claim, characterised in that the body is rotary.

8. A machine according to any one of claims 1, 2, 5 or 6, characterised in that the machine is a linear electromagnetic machine.

9. A machine according to any of claims 1 to 6, characterised in that the body is static.

10. A machine according to any preceding claim, characterised in that the machine is a motor.

11. A machine according to any of claims 1 to 7, characterised in that the machine is a generator.

## Patentansprüche

1. Elektromagnetische Gleichstrommaschine, die folgendes umfaßt:
einen Anker (309), der zum Schneiden des Magnetflusses bei Bewegung eine nicht geschlossene Ankerwicklung (310) mit entlang dem Anker (309) in Längsrichtung gleichmäßig verteilten leitfähigen Bändern (A1 - An) enthält, wobei jedes leitfähige Band (A1 - An) an seinem einen Ende einen ersten Kommutierungskontakt (CL1 - CLn) und am anderen Ende einen zweiten Kommutierungskontakt (CR1 - CRn) aufweist;
einen Körper;
mindestens einen Magnetpol (301, 302), der von dem Körper so getragen wird, daß er den Ankerwicklungen (310) orthogonal gegenübersteht;
einen von dem Körper getragenen ersten (303, 304) und einen zweiten (305, 306) leitfähigen Bürstensatz zum Kontaktieren der ersten Kommutierungskontakte (CL1 - CLn) bzw. der zweiten Kommutierungskontakte (CR1 - CRn), wobei jeder Bürstensatz (303 - 306) mindestens zwei Bürsten aufweist und der erste Bürstensatz abwechselnde Bürsten jeder Polarität aufweist, dadurch gekennzeichnet, daß jede Bürste des ersten und zweiten Bürstensatzes (303 - 306) eine Bogenlänge von weniger als 180 Grad (Phasenwinkel) aufweist und mindestens zwei Kommutierungskontakte (CL1 - CLn, CR1 - CRn) kontaktieren kann und daß zum Parallelschalten der leitfähigen Bänder (A1 - An) der erste und der zweite Satz leitfähiger Bürsten (303 - 306) gegeneinander um eine halbe Bürstenlänge versetzt sind.

2. Elektromagnetische Gleichstrommaschine, die folgendes umfaßt:
einen Anker (309), der zum Schneiden des Magnetflusses bei Bewegung eine nicht geschlossene Ankerwicklung (310) mit entlang dem Rotor (309) in Längsrichtung gleichmäßig verteilte leitfähige Bänder (A1 - An) enthält, wobei jedes leitfähige Band (A1 - An) an seinem einen Ende einen ersten Kommutierungskontakt (CL1 - CLn) und am anderen Ende einen zweiten Kommutierungskontakt (CR1 - CRn) aufweist;
einen Körper;
mindestens einen Magnetpol (301 - 302), der von dem Körper so getragen wird, daß er den Ankerwicklungen (310) orthogonal gegenübersteht;
einen vom dem Körper getragenen ersten (303, 304) und einen zweiten (305, 306) leitfähigen Bürstensatz zum Kontaktieren der ersten Kommutierungskontakte (CL1 - CLn) bzw. der zweiten Kommutierungskontakte (CR1 - CRn), wobei jeder Bürstensatz (303 - 306) zwei Bürsten aufweist und der erste Bürstensatz eine Bürste jeder Polarität aufweist, dadurch gekennzeichnet, daß jede Bürste des ersten und zweiten Bürstensatzes die ersten bzw. zweiten Kommutierungskontakte (CR1 - CRn, CL1 - CLn) mit einer Bogenlänge von etwas weniger als 180 Grad (Phasenwinkel) umfaßt, mit Trennfugen zwischen den Bürsten, die geringfügig größer sind als ein Kommutierungskontakt, um Kurzschlüsse zu verhindern, und daß zum Parallelschalten der leitfähigen Bänder (A1 - An) der erste (303, 304) und der zweite (305, 306) Bürstensatz voneinander um 90 Grad versetzt sind.

3. Maschine nach Anspruch 2, bei der der Anker (309) ein zylinderförmiger, scheibenförmiger oder kegelförmiger Rotor ist.

4. Maschine nach Anspruch 1, 2 oder 3, dadurch gekennzeichnet, daß sich der Winkel der Achse des mindestens einen Magnetpols (301, 302) zur Rotationsachse der Ankerwicklung (310) einstellen läßt, damit sie unter einem Winkel läuft, welcher der Wicklung (310) voraus- oder nacheilt, um je nach Voreil- oder Nacheilwinkel als Motor oder als Generator zu wirken.

5. (Früher 4) Maschine nach einem der vorhergehenden Ansprüche, dadurch gekennzeichnet, daß es sich bei dem mindestens einen Magnetpol (301, 302) um einen Permanentmagneten handelt.

6. Maschine nach einem der Ansprüche 1 bis 4, dadurch gekennzeichnet, daß es sich bei dem mindestens einen Magnetpol (301, 302) um einen Elektromagneten handelt.

7. Maschine nach einem der vorhergehenden Ansprüche, dadurch gekennzeichnet, daß der Körper umläuft.

8. Maschine nach einem der Ansprüche 1, 2, 5 oder 6, dadurch gekennzeichnet, daß es sich bei der Maschine um eine elektromagnetische Linearmaschine handelt.

9. Maschine nach einem der Ansprüche 1 bis 6, dadurch gekennzeichnet, daß der Körper statisch ist.

10. Maschine nach einem der vorhergehenden Ansprüche, dadurch gekennzeichnet, daß es sich bei der Maschine um einen Motor handelt.

11. Maschine nach einem der Ansprüche 1 bis 7, dadurch gekennzeichnet, daß es sich bei der Maschine um einen Generator handelt.

## Revendications

1. Machine électromagnétique à courant continu, comprenant :
- un induit (309) comprenant un enroulement d'induit à circuit non fermé (310) ayant des bandes conductrices (A1-An) régulièrement distribuées longitudinalement le long de l'induit (309) pour couper le flux magnétique lorsque l'induit est en mouvement, chaque bande conductrice (A1-An) comprenant un premier contact de commutation (CL1-CLn) disposé à une extrémité de la bande et un deuxième contact de commutation (CR1-CRn) disposé à l'autre extrémité de la bande conductrice (A1-An) ;
- un corps ;
- au moins un pôle magnétique (301, 302) porté par le corps orthogonalement en vis-à-vis des enroulements d'induit (310) ;
- un premier (303, 304) et un deuxième (305, 306) jeu de balais conducteurs portés par le corps pour entrer en contact avec les premiers contacts de commutation (CL1-CLn) et les deuxièmes contacts de commutation (CR1-CRn), respectivement, chaque jeu de balais (303-306) comprenant au moins deux balais et le premier jeu de balais comprenant des balais alternant de chaque polarité,
caractérisé en ce que chaque balai des premier et deuxième jeux de balais (303-306) a une longueur d'arc inférieure à 180 degrés (angle électrique) et peut se raccorder à au moins deux contacts de commutation (CL1-CLn, CR1-CRn) et en ce que les premier et deuxième jeux de balais conducteurs (303-306) sont décalés l'un par rapport à l'autre de la moitié d'une longueur de balai pour raccorder en parallèle les bandes conductrices (A1-An).

2. Machine électromagnétique à courant continu, comprenant :
- un induit (309) comprenant un enroulement d'induit à circuit non fermé (310) ayant des bandes conductrices (A1-An) régulièrement distribuées longitudinalement le long du rotor (309) pour couper le flux lorsque le rotor est en mouvement, chaque bande conductrice (A1-An) comprenant un premier contact de commutation (CL1-CLn) disposé à une extrémité de la bande et un deuxième contact de commutation (CR1-CRn) disposé à l'autre extrémité de la bande conductrice (A1-An) ;
- un corps ;
- au moins un pôle magnétique (301, 302) porté par le corps orthogonalement en vis-à-vis des enroulements d'induit (310) ;
- un premier (303, 304) et un deuxième (305, 306) jeu de balais conducteurs portés par le corps pour entrer en contact avec les premiers contacts de commutation (CL1-CLn) et les deuxièmes contacts de commutation (CR1-CRn), respectivement, chaque jeu de balais (303-306) comprenant deux balais et le premier jeu de balais comprenant un balai de chaque polarité,
caractérisé en ce que chaque balai des premier et deuxième jeux de balais (303-306) a une emprise ou longueur d'arc un peu inférieure à 180 degrés (angle électrique) dans la longueur d'arc des premier et deuxième contacts de commutation (CR1-CRn, CL1-CLn) respectivement, les intervalles de séparation entre les balais étant juste plus grands qu'un seul contact de commutation pour empêcher les courts-circuits, et en ce que le premier (303, 304) et le deuxième (305, 306) jeux de balais sont décalés de 90 degrés l'un par rapport à l'autre pour raccorder les bandes conductrices (Al-An) en parallèle.

3. Machine selon la revendication 2, dans laquelle l'induit (309) est un rotor cylindrique, discoïdal ou conique.

4. Machine selon l'une des revendications 1, 2 ou 3, caractérisée en ce que l'axe du (des) pôle(s) magnétique(s) (301, 302) est réglable angulairement autour de l'axe de rotation de l'enroulement d'induit (310) pour tourner avec un angle avançant ou retardant l'enroulement d'induit (310) afin d'agir en tant que moteur ou en tant que générateur en fonction de l'angle d'avance ou de l'angle de retard.

5. Machine selon l'une des revendications précédentes, caractérisée en ce que le(s) pôle(s) magnétique(s) (301, 302) est un aimant permanent.

6. Machine selon l'une des revendications 1 à 4, caractérisée en ce que le(s) pôle(s) magnétique(s) (301, 302) sont des électro-aimants.

7. Machine selon l'une des revendications précédentes, caractérisée en ce que le corps est un corps tournant.

8. Machine selon l'une quelconque des revendications 1, 2, 5 ou 6, caractérisée en ce que la machine est une machine électromagnétique linéaire.

9. Machine selon l'une des revendications 1 à 6, caractérisée en ce que le corps est statique.

10. Machine selon l'une des revendications précédentes, caractérisée en ce que la machine est un moteur.

11. Machine selon l'une des revendications 1 à 7, caractérisée en ce que la machine est un générateur.
